# EUROPÄISCHE PATENTSCHRIFT

(11) **EP 4 008 047 B1**
(45) Veröffentlichungstag und Bekanntmachung des Hinweises auf die Patenterteilung: **16.09.2026**
(21) Anmeldenummer: 20746096.5
(22) Anmeldetag: 01.07.2020
(51) Int. Cl.: H02K 1/276, H02K 1/32, H02K 9/19

(54) **ELEKTRISCHE ANTRIEBSEINHEIT, HYBRIDMODUL UND ANTRIEBSANORDNUNG FÜR EIN KRAFTFAHRZEUG**
ELECTRIC DRIVE UNIT, HYBRID MODULE, AND DRIVE ASSEMBLY FOR A MOTOR VEHICLE
UNITÉ D'ENTRAÎNEMENT ÉLECTRIQUE, MODULE HYBRIDE ET ENSEMBLE D'ENTRAÎNEMENT POUR VÉHICULE AUTOMOBILE

(30) Priorität: 01.08.2019 DE 102019120787
(43) Veröffentlichungstag der Anmeldung: 08.06.2022
(73) Patentinhaber: Schaeffler Technologies AG & Co. KG, 91074 Herzogenaurach (DE)
(72) Erfinder: TRINKENSCHUH, Andreas, 77815 Bühl (DE); LEHMANN, Steffen, 76275 Ettlingen (DE); HELFER, Marc, 67530 Ottrott (FR); ANGRICK, Carsten, 77767 Appenweier (DE); RUDER, Willi, 77933 Lahr (DE)
(74) Vertreter: Schaeffler Technologies
(86) Internationale Anmeldenummer: PCT/DE2020/100572
(87) Internationale Veröffentlichungsnummer: WO 2021/018343

(56) Entgegenhaltungen:
- EP-A1- 2 961 043
- EP-A1- 3 068 021
- EP-A2- 2 187 503
- DE-A1- 102013 215 790
- DE-A1- 102017 127 695
- US-A1- 2005 206 251
- US-A1- 2012 032 538
- US-A1- 2013 192 417

## Beschreibung

Die Erfindung betrifft eine elektrische Antriebseinheit, insbesondere als Bestandteil eines Hybridmoduls oder eines Hybridgetriebes, ein Hybridmodul für ein Kraftfahrzeug, insbesondere für ein Hybridkraftfahrzeug, und eine Antriebsanordnung für ein Kraftfahrzeug.

Aus dem Stand der Technik sind diverse Antriebseinrichtungen oder Antriebseinheiten für Hybridfahrzeuge bekannt.

Die DE 10 2015 222 690 A1, die DE 10 2015 222 691 A1 und die WO 2017 084 887 A1 beschreiben ein Verfahren zum Steuern einer Antriebseinrichtung eines Hybridfahrzeuges mit einem Getriebe und ein mit einem Getriebe ausgestattetes Hybridfahrzeug, welches ausgebildet ist, das Verfahren durchzuführen.

Die DE 10 2015 222 692 A1, die DE 10 2015 222 694 A1, die WO 2017 084 888 A1 und die WO 2017 084 889 A1 beschreiben ein Verfahren zum Betreiben einer Antriebseinrichtung eines Hybridfahrzeuges mit einem Getriebe und ein mit einem Getriebe ausgestattetes Hybridfahrzeug, welches ausgebildet ist, das Verfahren durchzuführen.

Ein jeweiliges Hybridfahrzeug in den genannten Verfahren umfasst dabei eine Antriebseinrichtung mit einer Verbrennungsraftmaschine, eine erste Elektromaschine, eine zweite Elektromaschine und einem Akkumulator.

Gemäß den Verfahren der DE 10 2015 222 690 A1 ist die Antriebseinrichtung zum Antrieb des Hybridfahrzeugs in einem rein elektrischen Betrieb, einem seriellen Hybridbetrieb oder in einem parallelen Hybridbetrieb betreibbar.

Gemäß den Verfahren der DE 10 2015 222 691 A1 und der WO 2017 084 887 A1 ist für den Betrieb der Antriebseinrichtung ein leistungsorientierter Modus oder ein verbrauchsorientierter Modus auswählbar.

Gemäß den DE 10 2015 222 692 A1 und der WO 2017 084 888 A1 umfasst die Antriebseinrichtung weiterhin eine Hauptkupplung im Drehmomentübertragungspfad zwischen der Verbrennungskraftmaschine und einem Antriebsrad, wobei die Antriebseinrichtung in einem ersten Betriebsmodus von drei Betriebsmodi betrieben wird und zumindest einmal vom ersten Betriebsmodus in einen zweiten Betriebsmodus der drei Betriebsmodi wechselt. Die drei Betriebsmodi realisieren dabei einen rein elektrischen Betrieb, einen seriellen Hybridbetrieb oder einen parallelen Hybridbetrieb.

Gemäß den DE 10 2015 222 694 A1 und der WO 2017 084 889 A1 umfasst die Antriebseinrichtung weiterhin eine Hauptkupplung und ein Getriebe, welche im Drehmomentübertragungspfad zwischen der Verbrennungskraftmaschine und dem Antriebsrad angeordnet sind.

Die DE 10 2017 127 695.5 offenbart wiederum einen Antriebsstrang für ein Hybridkraftfahrzeug, umfassend eine Getriebeeingangswelle, die über einen ersten Teilantriebsstrang mit einer ersten elektrischen Maschine und einer Verbrennungskraftmaschine verbunden ist und über einen zweiten Teilantriebsstrang mit einer zweiten elektrischen Maschine verbunden ist. Eine schaltbare Kupplung ist dabei zwischen den beiden Teilantriebssträngen angeordnet, so dass die erste elektrische Maschine und die zweite elektrische Maschine bei geschlossener Kupplung mit derselben Drehgeschwindigkeit drehen. Dabei ist vorgesehen, die erste und/oder zweite elektrische Maschine zu kühlen. Besonders ist es bevorzugt, wenn die Kühlung mittels einer Wasserkühlung aus einem Fahrzeug-Kühlkreis oder mittels einer Ölkühlung mit Getriebeöl aus dem Getriebe heraus ausgebildet ist. Die schaltbare Kupplung ist vorzugsweise als eine ölgekühlte Lamellenkupplung ausgebildet.

Die US 2012/032538 A1, EP 2 961 043 A1, DE 10 2013 215790 A1, EP 3 068 021 A1 offenbaren elektrische Maschinen mit axialen Kühlkanälen im Rotor.

Es ist weiterhin bekannt, dass in einer elektrischen Antriebseinrichtung, wie sie auch in einem Hybridfahrzeug bzw. in einem Antriebsstrang für ein Hybridkraftfahrzeug angeordnet sein kann, sogenannte Hotspots auftreten können. Ein Hotspot ist ein Bereich der Entstehung der größten Wärme im Rotor und/oder Stator beim Betrieb der Elektromaschine.

In der Regel angewandte Maßnahmen zur Kühlung eines Rotors und Stators einer Elektromaschine sind eine Kühlung des Rotors unter Ausnutzung der Fliehkraft von radial innen durch Kühlmittel, wobei das Kühlmittel hierbei entlang der Rotor-Stirnseiten fließt, und eine Kühlung des Stators von radial außen, durch ein Kühlmittel und eine Ableitung des Kühlmittels und damit auch der vom Kühlmittel aufgenommen Wärme. Dabei wird das Kühlmittel von einer Rotor-Stirnseite unter Hilfe der Fliehkraft nach radial außen transportiert und dann auf die Wickelköpfe des Stators weitergeleitet.

Eine derartige Kühlung kann jedoch in Abhängigkeit von den jeweiligen konstruktiven Gegebenheiten nicht ausreichend sein, um die am stärksten erhitzten Bereiche zu kühlen. Bei einer ungenügenden Kühlung treten Verlustleistungen in der jeweils betroffenen Elektromaschine auf.

Um diese Verlustleistung zu kompensieren und eine geforderte Leistung der Elektromaschine zu erreichen, werden üblicherweise entsprechend kosten- und bauraumintensive Magnete in den Elektromaschinen eingesetzt.

Hiervon ausgehend liegt der vorliegenden Erfindung die Aufgabe zugrunde, eine elektrische Antriebseinheit sowie ein damit ausgestattetes Hybridmodul und eine Antriebsanordnung zur Verfügung zu stellen, die eine optimale Kühlung bei geringen Bauraumanforderungen mit einer kostengünstigen Ausgestaltung kombinieren.

Die Aufgabe wird durch die erfindungsgemäße elektrische Antriebseinheit nach Anspruch 1 gelöst. Vorteilhafte Ausgestaltungen der elektrischen Antriebseinheit sind in den Unteransprüchen 2 bis 8 angegeben.

Ergänzend wird ein Hybridmodul für ein Kraftfahrzeug, welches die elektrische Antriebseinheit aufweist, gemäß Anspruch 9 zur Verfügung gestellt.

Weiterhin wird eine Antriebsanordnung für ein Kraftfahrzeug, welche das Hybridmodul umfasst, gemäß Anspruch 10 zur Verfügung gestellt.

Die Merkmale der Ansprüche können im Rahmen des Schutzumfangs in einer technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe "axial" und "radial" beziehen sich im Rahmen der vorliegenden Erfindung immer auf die Rotationsachse der Antriebswelle der elektrischen Antriebseinheit.

Die Erfindung betrifft eine elektrische Antriebseinheit nach Anspruch 1, insbesondere als Bestandteil eines Hybridmoduls oder eines Hybridgetriebes. Die elektrische Antriebseinheit umfasst eine Antriebswelle sowie eine erste elektrische Rotationsmaschine, deren Rotor drehfest mit der Antriebswelle gekoppelt ist. Dabei ist im Rotor beabstandet zur Antriebswelle ein Axial-Strömungskanal ausgebildet, der mit zumindest einer Komponente seiner Längserstreckungsrichtung parallel zur Rotationsachse des Rotors verläuft, sodass beim Betrieb der ersten elektrischen Rotationsmaschine auf ein Fluid im Axial-Strömungskanal Wärme übertragbar ist, die insbesondere zwischen dem Rotor und einem Stator der ersten elektrischen Rotationsmaschine entstanden ist.

Der Axial-Strömungskanal verläuft insbesondere vollständig parallel zur Rotationsachse des Rotors.

Durch die Anordnung des Axial-Strömungskanals im Körper des Rotors ist es möglich, das Fluid dicht am Bereich der Entstehung der größten Wärme beim Betrieb der elektrischen Rotationsmaschine entlang zu führen, um somit effizient aus diesem Bereich Wärme abzuführen. Entsprechend lässt sich die elektrische Rotationsmaschine mit geringeren Verlustleistungen bzw. einem erhöhten Wirkungsgrad betreiben und/oder eine gewünschte Leistung unter Einsatz günstigerer Materialien, insbesondere Magnet-Materialien erzielen, und/oder wenig Bauraum beanspruchen.

Dabei kann es sein, dass die Antriebswelle an einem ersten stirnseitigen Endbereich einen Fluid-Einlass aufweist sowie damit über einen zentralen Strömungskanal gekoppelt wenigstens einen ersten radialen Auslass und ggf. einen endseitigen Auslass aufweist, wobei der erste radiale Auslass derart positioniert ist, dass durch diesen ersten radialen Auslass Fluid der ersten elektrischen Rotationsmaschine zwecks deren Kühlung und/oder Schmierung zuführbar ist.

Der zentrale Strömungskanal verläuft dabei insbesondere koaxial zur Rotationsachse der Antriebswelle. Die Rotationsachse der Antriebswelle entspricht dabei auch der Rotationsachse der ersten elektrischen Rotationsmaschine, also der Achse, um welche der Rotor der ersten elektrischen Rotationsmaschine drehbar ist.

Der endseitige Auslass muss dabei nicht zwingend am stirnseitigen Ende der Antriebswelle angeordnet sein, jedoch ist das der Auslass, der am dichtesten an dem dem Fluideinlass gegenüberliegenden Endbereich angeordnet ist. Es kann aber auch vorgesehen sein, dass der endseitige Auslass einem stirnseitigen Auslass der Antriebswelle an dem dem Fluideinlass gegenüberliegenden Endbereich entspricht.

Gemäß einem weiteren Aspekt der Erfindung sind an der radialen Außenseite des Rotors Magneten angeordnet, wobei der Axial-Strömungskanal wenigstens eine radiale Position im Rotor aufweist, die mindestens 8/10 des Radius der minimalen radialen Position der Magneten entspricht.

Damit ist der Axial-Strömungskanal im Wesentlichen in Umfangsrichtung zwischen den Magneten und/oder bezüglich der Magneten etwas radial nach innen versetzt angeordnet.

Insbesondere kann die Position des Axial-Strömungskanals auch derart definiert sein, dass der Axial Strömungskanal in einem radial äußersten Drittel des Körpers des Rotors angeordnet ist.

Gemäß einer weiteren vorteilhaften Ausführungsform ist wenigstens ein axial seitlicher Auslass des Axial-Strömungskanals derart angeordnet, dass daraus austretendes Fluid an einen Stator der ersten elektrische Rotationsmaschine, insbesondere an einen vom oder am Stator ausgebildeten Wickelkopf zwecks dortiger Kühlungswirkung gelangt.

Insbesondere kann diese Ausgestaltung axial beidseitig des Rotors vorgesehen sein. Bevorzugt ist vorgesehen, dass wenigstens 80% des vom Axial-Strömungskanal transportierten Fluids an den Stator bzw. an den Wickelkopf gelangt.

Gemäß einer weiteren Ausführungsform ist im Rotor ein im Wesentlichen radial verlaufender Radial-Strömungskanal ausgebildet, der strömungstechnisch mit dem Axial-Strömungskanal gekoppelt ist.

Zur Zuführung von Fluid zum Axial-Strömungskanal kann der Radial-Strömungskanal im Wesentlichen in der axialen Mitte des Rotors angeordnet sein. Der Kühlungseffekt des in den Strömungskanälen führbaren Fluids tritt somit im Wesentlichen in der axialen Mitte der elektrischen Rotationsmaschine und somit auch axial mittig bezüglich des Stators bzw. seiner Windungen auf.

Im Radial-Strömungskanal wird Fluid unter Ausnutzung der Fliehkraft nach radial außen und demzufolge zum Axial-Strömungskanal transportiert.

In der Antriebswelle ist ein zentraler Hohlraum bzw. Strömungskanal mit wenigstens einem radialen Auslass ausgebildet, welcher strömungstechnisch mit dem Radial-Strömungskanal zwecks Zufuhr von Fluid gekoppelt ist.

In einer ergänzenden Ausführungsform weist der Rotor mehrere den Rotor axial unterteilende Segmente auf, wobei mindestens ein Fluidverteiler zwischen Segmenten angeordnet ist, der mehrere Radial-Strömungskanäle ausbildet.

Der Fluidverteiler hat die Aufgabe, das Fluid unter Einfluss der Fliehkraft nach radial außen zu den Bereichen besonderer Wärmebelastung zu leiten.

Insbesondere kann vorgesehen sein, dass die Radial-Strömungskanäle in Bezug zu einer zur Rotationsachse verlaufenden radial verlaufenden Richtung einen Winkel von 10 bis 70 Grad aufweisen.

Dadurch wird Zentrifugalkraft- sowie Trägheitskraft-bedingt die Förderung des Fluids nach radial außen und somit in Richtung auf den Stator bzw. zu den wärmsten Bereichen der elektrischen Rotationsmaschine begünstigt.

Insbesondere ist der Fluidverteiler jedoch an seiner radialen Außenseite geschlossen. Derart wird erreicht, dass durch den Radial-Strömungskanal kein Fluid unmittelbar in den Spalt zwischen Rotor und Stator gelangen kann, sodass eine dortige Beeinträchtigung des Fluids durch Scherung verhindert wird.

In einer Ausführungsform des Rotors, in welcher dieser eine gerade Anzahl von Segmenten aufweist, ist ein Fluidverteiler zwischen Segmenten gleicher Anzahl, die auf beiden axialen Seiten vorhanden sind, angeordnet.

In einer Ausführungsform des Rotors, in welcher dieser eine ungerade Anzahl von Segmenten aufweist, umfasst der Rotor mehrere Fluidverteiler zwischen Segmenten, bevorzugt in einer symmetrischen Anordnung, wobei weiterhin bevorzugt nur ein Segment axial zwischen zwei Fluidverteilern vorhanden ist.

Dabei können mehrere Segmente einen Abschnitt des Axial-Strömungskanals ausbilden, wobei die Segmente in Bezug zueinander hinsichtlich der Ausrichtung der Abschnitte des Axial-Strömungskanals in ihren Winkelpositionen versetzt angeordnet sind, sodass der durch die Abschnitte ausgebildete Axial-Strömungskanal an dem Umfang der radialen Position des Axial-Strömungskanals zumindest streckenweise eine Steigung aufweist.

Das heißt, dass die einzelnen Segmente in verschränkter Anordnung angeordnet sind. Durch diese verschränkte Anordnung kann sich hinsichtlich der einzelnen Winkelpositionen der Magnete der Segmente auch eine verschränkte Anordnung dieser einzelnen Magnete ergeben. In alternativer Ausführungsform ist vorgesehen, dass zwar die einzelnen Axial-Strömungskanal-Abschnitte verschränkt zueinander angeordnet sind, jedoch die Gesamtheit der Magnete in ihrer durch die Segment-Bauweise sich ergebenden Reihen-Anordnung achsparallel angeordnet sind. Aufgrund dessen, dass der Axial-Strömungskanal durch einzelne Abschnitte in den einzelnen Segmenten zusammengesetzt ist, ergibt sich insgesamt ein abgestufter Verlauf des Axial-Strömungskanals. Die Steigung einer Interpolation dieses abgestuften Verlaufs ist dabei derart ausgebildet, dass eine Strömung des Fluids durch den Axial-Strömungskanal mit axialer Komponente bei Rotation des Rotors in einer bevorzugten Drehrichtung erleichtert wird. Das bedeutet, dass ausgehend von einem axial zentralen Bereich des Rotors der betreffende Bereich des axialen Strömungskanals in Richtung nach axial außen sich mit einer Komponente in die der bevorzugten Drehrichtung entgegengesetzten Richtung erstreckt. Dadurch ergibt sich insbesondere bei einer geraden Anzahl von Rotor-Segmenten nahezu eine V-Form des Axial-Strömungskanals, insbesondere eine symmetrische V-Form.

Auch in dieser Ausführungsform kann der Rotor an einer axialen Seite ein Leitelement aufweisen, welches zur Verhinderung des Eintritts von Fluid in den Spalt zwischen Rotor und Stator die gleiche Ausgestaltung haben kann wie zur weiteren Ausführungsform beschrieben.

In einer weiteren Ausführungsform der Erfindung weist der Rotor wenigstens ein an einer axialen Stirnseite angeordnetes Leitelement auf zur Ausbildung wenigstens eines Zwischenraums zwischen einem Rotorsegment sowie dem Leitelement zur Ermöglichung einer Fluidströmung mit radialer Komponente zwecks Fluidzufuhr an der Stirnseite in den Axial-Strömungskanal.

Das heißt, dass der jeweilige Zwischenraum und der Axial-Strömungskanal strömungstechnisch miteinander verbunden sind.

Zum Zweck der Fluidversorgung bildet der Rotor und/oder die Antriebswelle im Übergangsbereich zwischen Rotor und Antriebswelle einen axialen Verteilungskanal aus, zur Ermöglichung einer Fluid-Strömung im Wesentlichen achsparallel zu einem jeweiligen Leitelement, so dass das Fluid dann entlang des Leitelements zum Axial-Strömungskanal transportiert werden kann.

Das heißt, dass bevorzugt axial beidseitig jeweils ein seitliches Leitelement angeordnet ist. Dabei kann insbesondere vorgesehen sein, dass diese beiden Leitelemente den Rotor axial vorspannen, um die axiale Position der Segmente des Rotors zu sichern und einer Verdrehung der Segmente des Rotors zueinander entgegen zu wirken.

Entsprechend ist in dieser Ausgestaltung vorgesehen, dass der Strömungspfad des Fluids mäanderförmig durch den Rotor verläuft, zwecks optimaler Übertragung von Wärme aus dem Rotor in das Fluid.

Des Weiteren kann vorgesehen sein, dass das Leitelement einen Durchlass aufweist zum axialen Auslass von Fluid aus dem Zwischenraum sowie an seiner radialen Außenseite ein Fluidführungselement, mit welchem aus dem Durchlass tretendes Fluid von einem Spalt zwischen Rotor und einem Stator der ersten elektrischen Rotationsmaschine axial weg leitbar ist.

Weiterhin kann zusätzlich oder alternativ das Leitelement derart ausgestaltet sein, dass es einen Durchlass aufweist zum axialen Auslass von Fluid aus dem Zwischenraum, wobei es an seiner radialen Außenseite mit einer derartigen axialen Dicke ausgeführt ist, dass aus dem Durchlass tretendes Fluid an einer Einströmung in einen Spalt zwischen Rotor und einem Stator der ersten elektrischen Rotationsmaschine im Wesentlichen gehindert wird.

Entsprechend ist vorgesehen, dass ein Leitelement nicht zwingend im Bereich seiner radialen Außenseite axial geschlossen ist, sondern dort zumindest einen Durchlass ausbildet, zur Realisierung einer Doppelfunktion, nämlich die Fluid-Versorgung des Axial-Strömungskanals sowie auch die direkte Zufuhr von Fluid zum Stator durch einzelne Strömungsleitelemente im Leitelement.

Ein mäanderförmiger Strömungspfad kann dabei sowohl derart realisiert sein, dass ein Fluid an einer ersten axialen Seite des Rotors an den Axial-Strömungskanal herangeführt und in diesen eingeleitet wird, und auf der gegenüberliegenden zweiten axialen Seite des Rotors wieder aus dem Axial-Strömungskanal austritt. Alternativ kann das Fluid an der zweiten axialen Seite des Rotors an den Axial-Strömungskanal herangeführt werden und auf der gegenüberliegenden ersten axialen Seite des Rotors wieder aus dem Axial-Strömungskanal austreten.

Insbesondere ist dabei vorteilhaft, wenn beide dieser genannten mäanderförmigen Strömungspfade in einem Rotor realisiert sind, da damit sichergestellt werden kann, dass durch den Rotor fließendes Fluid auf beiden axialen Seiten des Rotors aus Durchlässen in den Leitelementen an beide axiale Seiten des Stators geführt wird.

Dabei kann das Leitelement mehrere Strömungsleitelemente umfassen, die unter Verzweigung Fluid nach radial außen transportieren können.

Die mehreren Strömungsleitelemente des Leitelements können hier unter anderem eine V-Form zum Transport des Fluids zum Strömungskanal mit zumindest radialer Komponente ausbilden, zwecks Verteilung des Fluids auf mehrere Strömungspfade in unterschiedlichen Winkelpositionen.

Bei einer Ausgestaltung der Erfindung mit zwei Leitelementen, wobei axial auf beiden Seiten des Rotors jeweils ein Leitelement angeordnet ist, kann vorgesehen sein, dass die beiden Leitelemente vorzugsweise identisch ausgestaltet sind in Bezug auf deren Strömungsleitelemente, was bedeutet, dass deren Strömungsleitelemente eine gleiche Position auf dem Leitelement aufweisen und die Strömungsleitelemente selbst gleichausgestaltet sind. Nicht ausgeschlossen ist jedoch, dass die beiden Leitelemente im Vergleich auch eine ungleiche Ausgestaltung ihrer Strömungsleitelemente aufweisen. Eine derartige ungleiche Ausgestaltung kann zum Beispiel dem geschuldet sein, dass eines der beiden Leitelemente als Referenz für einen Rotor-Drehzahlsensor genutzt wird und damit spezielle Anforderungen an die axiale Außenseite des jeweiligen Leitelements gestellt werden, die sich auf die Position und/oder Ausgestaltung eines jeweiligen Strömungsleitelements auswirken.

Die erfindungsgemäße elektrische Antriebseinheit weist den Vorteil auf, dass mittels des Axial-Strömungskanals im Rotor Fluid zwecks Kühlung der elektrischen Rotationsmaschine dicht an einen Bereich der Entstehung der größten Wärme, einen sogenannten Hotspot, geführt werden kann. Das durch den Axial-Strömungskanal strömende Fluid kann somit die in diesem Bereich vorhandene Wärme zumindest teilweise effizient abführen und die elektrische Rotationsmaschine optimal kühlen, wodurch insgesamt eine Steigerung des Wirkungsgrads der elektrischen Rotationsmaschine zu verzeichnen ist.

Weiterhin können aufgrund der geringeren thermischen Belastungen kostengünstige Materialien, insbesondere kostengünstige Magnete, eingesetzt werden und/oder der benötigte Bauraum gering dimensioniert werden.

Des Weiteren wird erfindungsgemäß ein Hybridmodul für ein Kraftfahrzeug, insbesondere für ein Hybridkraftfahrzeug, zum Ankoppeln einer Verbrennungskraftmaschine zur Verfügung gestellt, das eine erfindungsgemäße elektrische Antriebseinheit sowie eine Anschlusseinrichtung zum Anschluss einer Verbrennungskraftmaschine aufweist.

Diese Anschlusseinrichtung kann insbesondere an der Antriebswelle, zum Beispiel in Form einer Keilwellenverzahnung, ausgeführt sein.

Im Sinne der vorliegenden Erfindung kann unter einem Hybridmodul auch ein sogenanntes Hybridgetriebe verstanden werden, welches neben den Aggregaten des Hybridmoduls zumindest noch eine Getriebeübersetzung aufweist. Insofern das Hybridmodul selbst keine Getriebekomponente aufweist, kann es dazu ausgestaltet sein, mit einem Getriebe zur Übertragung eines Drehmoments gekoppelt zu werden. Weiterhin ist es möglich, dass das Hybridmodul eine Kupplungseinrichtung und/oder eine zweite elektrische Rotationsmaschine umfasst, wobei die Kupplungseinrichtung bzw. die zweite elektrische Rotationsmaschine derart auf der Antriebswelle angeordnet ist, dass mittels wenigstens eines radialen Auslasses zur Kupplungseinrichtung bzw. zur zweiten elektrischen Rotationsmaschine Fluid zwecks Kühlung und/oder Schmierung der Kupplungseinrichtung bzw. der zweiten elektrischen Rotationsmaschine führbar ist.

So ist zum Beispiel vorgesehen, dass eine auch als K0 bezeichnete Kupplungseinrichtung mit einer Eingangsseite fest mit der Antriebswelle verbunden ist und über einen zweiten radialen Auslass mit Fluid anströmbar ist zwecks Kühlung und/oder Schmierung.

Eine Ausgangsseite der Kupplungseinrichtung kann mit einer Abtriebswelle des Hybridmoduls gekoppelt sein. Ein Rotor der zweiten elektrischen Rotationsmaschine kann drehfest mit einer derartigen Abtriebswelle verbunden sein. Dabei kann ein radialer Auslass derart positioniert sein, dass die zweite elektrische Rotationsmaschine über den radialen Auslass mit Fluid anströmbar ist zwecks Kühlung und/oder Schmierung. Zu diesem Zweck kann die Abtriebswelle ebenfalls mit Öffnungen oder Durchbrüchen versehen sein, um eine Fluid-Strömung vom betreffenden radialen Auslass zur zweiten elektrischen Rotationsmaschine zu gewährleisten.

Weiterhin wird erfindungsgemäß eine Antriebsanordnung für ein Kraftfahrzeug, umfassend ein erfindungsgemäßes Hybridmodul sowie ein Antriebsaggregat, insbesondere eine Verbrennungskraftmaschine, sowie ein Getriebe zur Verfügung gestellt, wobei das Hybridmodul mit einer Eingangsseite mit dem Antriebsaggregat und mit einer Ausgangsseite mit dem Getriebe mechanisch gekoppelt ist.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
- Fig. 1:: ein erfindungsgemäßes Hybridmodul in einer geschnittenen Seitenansicht,
- Fig. 2:: verschiedene Möglichkeiten des Aufbaus eines Rotors einer elektrischen Rotationsmaschine eines erfindungsgemäßen Hybridmoduls gemäß einer ersten Ausführungsform,
- Fig. 3:: verschiedene Möglichkeiten des Aufbaus eines Rotors einer elektrischen Rotationsmaschine eines erfindungsgemäßen Hybridmoduls gemäß einer zweiten Ausführungsform,
- Fig. 4:: eine erfindungsgemäße elektrische Antriebseinheit in einer geschnittenen perspektivischen Ansicht gemäß der ersten Ausführungsform,
- Fig. 5:: ein Rotor einer ersten elektrischen Rotationsmaschine der elektrischen Antriebseinheit gemäß der ersten Ausführungsform,
- Fig. 6:: eine erfindungsgemäße elektrische Antriebseinheit in einer geschnittenen perspektivischen Ansicht gemäß der zweiten Ausführungsform,
- Fig. 7:: ein Rotor einer elektrischen Rotationsmaschine der elektrischen Antriebseinheit gemäß der zweiten Ausführungsform,
- Fig. 8:: einen Fluidverteiler eines Rotors einer elektrischen Rotationsmaschine eines erfindungsgemäßen Hybridmoduls,
- Fig. 9:: eine Abtriebswelle und zweite elektrische Rotationsmaschine eines erfindungsgemäßen Hybridmoduls in geschnittener Seitenansicht und
- Fig.10:die: Abtriebswelle und zweite elektrische Rotationsmaschine des erfindungsgemäßen Hybridmoduls in perspektivischer Ansicht.

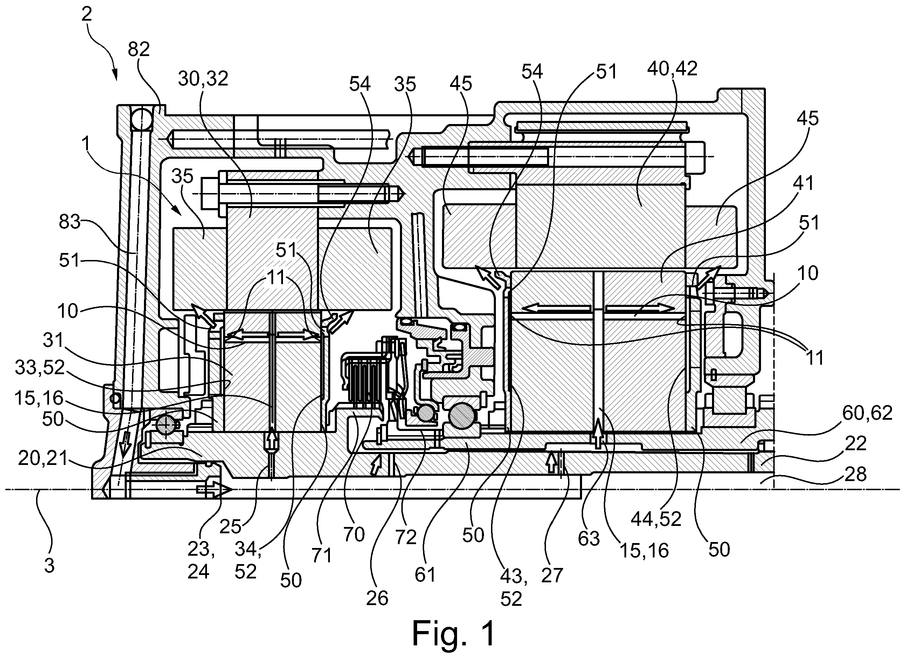

In Fig. 1 ist ein erfindungsgemäßes Hybridmodul 2 in einer geschnittenen Seitenansicht dargestellt.

Das Hybridmodul 2 umfasst dabei eine erfindungsgemäß ausgestaltete elektrische Antriebseinheit 1 mit einer Antriebswelle 20 sowie einer ersten elektrischen Rotationsmaschine 30, deren Rotor 31 drehfest mit der Antriebswelle 20 gekoppelt ist. Weiterhin umfasst das Hybridmodul 2 eine zweite Rotationsmaschine 40, deren Rotor 41 drehfest auf einer Abtriebswelle 60 angeordnet ist, und eine Kupplungseinrichtung 70.

Die Abtriebswelle 60 ist an ihrem ersten axialen Endabschnitt 61 mit der Kupplungseinrichtung 70 verbunden und bildet dabei die Ausgangsseite 72 der Kupplungseinrichtung 70, wobei die Eingangsseite 71 der Kupplungseinrichtung 70 von der Antriebswelle 20 ausgebildet ist. Die Kupplungseinrichtung 70 ist dabei axial zwischen den beiden elektrischen Rotationsmaschinen 30, 40 angeordnet.

Die Antriebswelle 20 ist als Hohlwelle ausgestaltet und bereichsweise von der ebenfalls als Hohlwelle ausgestalteten Abtriebswelle 60 radial umgeben. Die Antriebswelle 20 und die Abtriebswelle 60, und damit auch die Rotoren 31, 41 der beiden elektrischen Rotationsmaschinen 30, 40, sind somit koaxial zueinander angeordnet und rotieren um die gleiche Rotationsachse 3 des Hybridmoduls 3.

Ein Stator 32 der ersten elektrischen Rotationsmaschine 30 sowie ein Stator 42 der zweiten elektrischen Rotationsmaschine 40 sind fest mit einem Hybridgehäuse 80 des Hybridmoduls 2 verbunden.

Die Abtriebswelle 60 ist an ihrem ersten axialen Endabschnitt 61 und an ihrem zweiten axialen Endabschnitt 62 in dem Hybridgehäuse 80 des Hybridmoduls 2 gelagert. Die Antriebswelle 20 ist an ihrem ersten stirnseitigen Endbereich 21 ebenfalls im Hybridgehäuse 80 des Hybridmoduls 2 gelagert und an ihrem zweiten stirnseitigen Endbereich 12 radial innen am zweiten axialen Endabschnitt 62 der Abtriebswelle 60 gelagert.

Auf der der zweiten Rotationsmaschine 40 axial abgewandten Seite der ersten Rotationsmaschine 30 verläuft in der Wandung des Hybridgehäuses 80 des Hybridmoduls 2, in der die Antriebswelle 3 gelagert ist, eine Fluidzufuhrleitung 81. Diese Fluidzufuhrleitung 81 verläuft von radial außen nach radial innen und ist dort strömungstechnisch mit einem Fluid-Einlass 24 eines zentralen Strömungskanals 23 der Antriebswelle 20 verbunden. Der Strömungskanal 23 entspricht dabei dem Hohlraum der als Hohlwelle ausgeführten Antriebswelle 20 und verläuft in axialer Richtung koaxial zur Rotationsachse 3 durch die gesamte axiale Länge der Antriebswelle 20. Der Fluid-Einlass 24 des zentralen Strömungskanals 23 ist am ersten stirnseitigen Endbereich 21 der Antriebswelle 20 ausgebildet und dient der Zuführung eines Fluids in den zentralen Strömungskanal 23. Das im zentralen Strömungskanal 23 transportierbare Fluid dient dabei der Schmierung und/oder Kühlung von Aggregaten der elektrischen Antriebseinheit 1 bzw. des Hybridmoduls 2.

Um das Fluid im zentralen Strömungskanal 23 zu diesen Aggregaten zu transportieren, weist die Antriebswelle 20 einen ersten radialen Auslass 25, einen zweiten radialen Auslass 26, einen dritten radialen Auslass 27 sowie einen endseitigen Auslass 28 auf. Der endseitige Auslass 28 ist dabei in einem zweiten stirnseitigen Endbereiche 22 der Antriebswelle 20 angeordnet, welcher dem ersten stirnseitigen Endbereiche 21 axial gegenüber liegt.

Mit einem jeweiligen radialen Auslass 25, 26, 27, 28 der Antriebswelle 20 ist ein sich im zentralen Strömungskanal 23 befindliches Fluids zu einem jeweiligen Aggregat der elektrischen Antriebseinheit bzw. des Hybridmoduls transportierbar. Der erste radiale Auslass 25 dient der strömungstechnischen Verbindung des zentralen Strömungskanals 23 mit der ersten Rotationsmaschine 30 der elektrischen Antriebseinheit 1. Der zweite radiale Auslass 26 dient der strömungstechnischen Verbindung des zentralen Strömungskanals 23 mit der Kupplungseinrichtung 70 des Hybridmoduls 2. Der dritte radiale Auslass 27 dient der strömungstechnischen Verbindung des zentralen Strömungskanals 23 mit der zweiten Rotationsmaschine 40 des Hybridmoduls 2. Der endseitige Auslass 28 dient der strömungstechnischen Verbindung des zentralen Strömungskanals 23 mit einem Getriebe (hier nicht dargestellt) des Hybridmoduls 2.

Der dritte radiale Auslass 27 der Antriebswelle 20 ist radial von der Abtriebswelle 60 überdeckt, wobei in der Abtriebswelle 60 zum Zweck der Leitung eines Fluids vom zentralen Strömungskanal 23 zur zweiten elektrischen Rotationsmaschine 40 eine radiale Öffnung 63 vorgesehen ist, durch welche das durch den dritten radialen Auslass 27 austretende Fluid an die zweite elektrische Rotationsmaschine 40 führbar ist.

Der Rotor 31 der ersten elektrischen Rotationsmaschine 30 wie auch der Rotor 41 der zweiten elektrischen Rotationsmaschine 40 umfassen zudem jeweils einen Fluidverteiler 15, welcher Radial-Strömungskanäle 16 ausbildet. Der Fluidverteiler 15 ist jeweils axial mittig im jeweiligen Rotor 31, 41 positioniert. Der erste radiale Auslass 25 der Antriebswelle 20 ist dabei strömungstechnisch mit dem Radial-Strömungskanal 16 des Fluidverteilers 15 im Rotor 31 der ersten elektrischen Rotationsmaschine 30 verbunden, wobei dritte radiale Auslass 27 der Antriebswelle 20 strömungstechnisch über die radiale Öffnung 63 in der Abtriebswelle 60 mit dem Radial-Strömungskanal 16 des Fluidverteilers 15 im Rotor 41 der zweiten elektrischen Rotationsmaschine 40 verbunden ist.

Ein jeweiliger Rotor 31, 41 einer elektrischen Rotationsmaschine 30, 40 weist zudem einen Axial-Strömungskanal 10 auf, welcher im Wesentlichen im radial äußersten Drittel des jeweiligen Rotors 31, 41 positioniert ist und strömungstechnisch mit dem Radial-Strömungskanal 16 verbunden ist.

Weiterhin ist am Rotor 31 der ersten Rotationsmaschine 30 auf seiner ersten axialen Stirnseite 33 und seiner zweiten axialen Stirnseite 34 jeweils ein Leitelement 50 angeordnet. Auch am Rotor 41 der zweiten elektrischen Rotationsmaschine 40 ist auf seiner ersten axialen Stirnseite 43 und seiner zweiten axialen Stirnseite 44 jeweils ein Leitelement 50 angeordnet. Ein jeweiliges Leitelement 50 ist dabei derart ausgestaltet, dass es einen Zwischenraum 52 zwischen sich und dem Rotor 31, 41 ausbildet, an dem es axial anliegt. Weiterhin weist ein jeweiliges Leitelement 50 radial außen einen axialen Durchlass 51 auf. Ein Axial-Strömungskanal 10 eines jeweiligen Rotors 31, 41 ist dabei axial beidseitig durch axial seitliche Auslässe 11 mit jeweils einem dieser Zwischenräume 52 verbunden, wobei ein jeder dieser Zwischenräume 52 wiederum mit einem Durchlass 51 des entsprechenden Leitelements 50 strömungstechnisch verbunden ist. Derart ist zwischen einem Axial-Strömungskanal 10 und einer jeweiligen axialen Außenseite eines Rotors 31, 41 eine strömungstechnische Verbindung realisiert.

Ein jeweiliger Durchlass 51 dient dabei dazu, Fluid zu Wickelköpfen 35 des Stators 32 der ersten elektrischen Rotationsmaschine 30 bzw. zu Wickelköpfen 45 des Stators 42 der zweiten elektrischen Rotationsmaschine 40 zu leiten. Die Bewegung des Fluids nach Austritt aus einem Durchlass 51 in Richtung radial außen wird dabei durch die auf das Fluid wirkende Zentrifugalkraft, hervorgerufen durch die Rotation eines Rotors 31, 41 der jeweiligen elektrischen Rotationmaschine 30, 40, unterstützt bzw. gewährleistet.

Um ein aus dem Durchlass 51 austretendes Fluid daran zu hindern, in einen Spalt zwischen Rotor 31, 41 und Stator 32, 42 einer jeweiligen elektrischen Rotationmaschine 30, 40 zu gelangen, weisen das Leitelement 50 an der zweiten axialen Stirnseite 34 des Rotors 31 der ersten elektrischen Rotationsmaschine 30 sowie das Leitelement 50 an der ersten axialen Stirnseite 43 des Rotors 41 der zweiten elektrischen Rotationsmaschine 40 ein gekröpft geformtes Fluidführungselement 54 auf, welches das austretende Fluid axial beabstandet zu einem Spalt zwischen Rotor 31, 41 und Stator 32, 42 einer jeweiligen elektrischen Rotationmaschine 30, 40 nach radial außen zu den jeweiligen Wickelköpfen 35, 45 führt. Das Leitelement 50 an der ersten axialen Stirnseite 33 des Rotors 31 der ersten elektrischen Rotationsmaschine 30 und das Leitelement 50 an der zweiten axialen Stirnseite 44 des Rotors 41 der zweiten elektrischen Rotationsmaschine 40 sind axial dicker ausgestaltet und gewährleisten somit, dass das am jeweiligen Durchlass austretende Fluid axial beabstandet zu einem jeweiligen Spalt zwischen Rotor 31, 41 und Stator 32, 42 einer jeweiligen elektrischen Rotationmaschine 30, 40 nach radial außen zu den jeweiligen Wickelköpfen 35, 45 geleitet wird.

Bei Integration des hier dargestellten Hybridmoduls 2 in einen Antriebsstrang eines Kraftfahrzeugs wird die Antriebswelle 20 über eine Anschlusseinrichtung (hier nicht dargestellt) an eine Verbrennungskraftmaschine des Antriebsstrangs gekoppelt. Die Abtriebswelle 60 wird dabei an ein Getriebe des Antriebsstrangs gekoppelt.

Ein von der Verbrennungskraftmaschine bereitgestelltes Drehmoment kann somit über die Anschlusseinrichtung auf die Antriebswelle 20 und damit an die erste elektrische Rotationsmaschine 30 übertragen werden, beispielsweise zwecks Generierung von elektrischer Energie mittels Betreiben der ersten elektrischen Rotationsmaschine 30 in einem Generator-Betrieb. Bei geöffneter Kupplungseinrichtung 70 kann die zweite elektrische Rotationsmaschine 40 als Antriebseinheit ein mit dem Hybridmodul 2 ausgestattetes Hybridfahrzeug rein elektrisch antreiben. Bei geschlossener Kupplungseinrichtung 70 können die beiden elektrischen Rotationsmaschinen 30, 40, ggf. zusammen mit der Verbrennungskraftmaschine, das mit dem Hybridmodul 2 ausgestattete Hybridfahrzeug gemeinsam in einem Boost-Modus antreiben.

Ein durch die Fluidzufuhrleitung 81 geleitetes Fluid zur Kühlung und/oder Schmierung wird an den Fluid-Einlass 24 und damit in den zentralen Strömungskanal 23 der Antriebswelle 20 übertragen. Das Fluid wird von dort über den ersten radialen Auslass 25 der Antriebswelle 20 an die erste elektrische Rotationsmaschine 30 übertragen, über den zweiten radialen Auslass 26 der Antriebswelle 20 an die Kupplungseinrichtung 70 übertragen, über den dritten radialen Auslass 27 der Antriebswelle 20 und die radiale Öffnung 63 der Abtriebswelle 60 an die zweite Rotationsmaschine 40 übertragen und schließlich über den endseitigen Auslass 28 an das Getriebe übertragen. Das durch den ersten radialen Auslass 25 an die erste elektrische Rotationsmaschine 30 übertragene Fluid wird zunächst durch den Radial-Strömungskanal 16 des Fluidverteilers 15 im Rotor 31 der ersten elektrischen Rotationsmaschine 30 nach radial außen geleitet und anschließend über den Axial-Strömungskanal 10 an die beiden axialen Stirnseiten 33, 34 des Rotors 31 der ersten elektrischen Rotationsmaschine 30 geleitet. Dort wird das Fluid über den jeweiligen axial seitlichen Auslass 11 des Axial-Strömungskanals 10 in den jeweiligen Zwischenraum 52 und folglich über den jeweiligen Durchlass 51 auf beiden axialen Seiten des Stators 32 der ersten elektrischen Rotationsmaschine 30 an dessen Wickelköpfe 35 geleitet.

Das durch den dritten radialen Auslass 27 und die radiale Öffnung 63 an die zweite Rotationsmaschine 40 übertragene Fluid wird wie zur ersten Rotationsmaschine 30 beschrieben geführt.

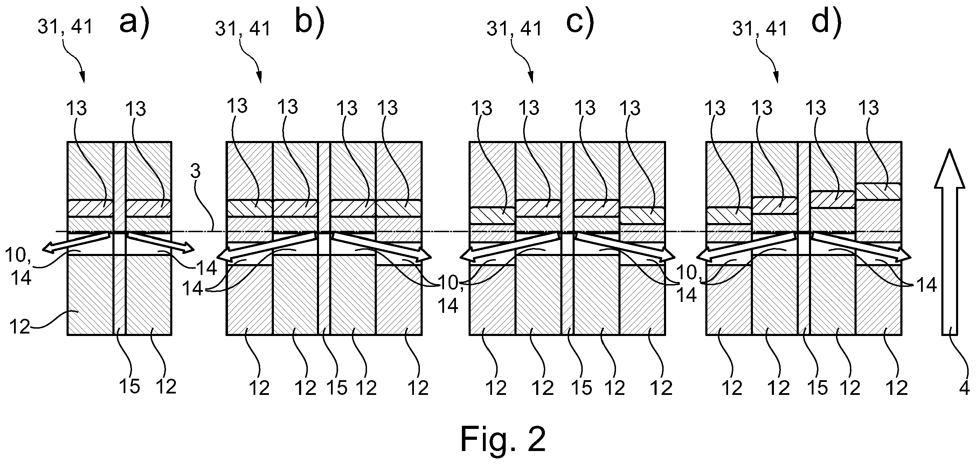

Fig. 2 zeigt verschiedene Möglichkeiten des Aufbaus eines Rotors 31, 41 einer elektrischen Rotationsmaschine eines erfindungsgemäßen Hybridmoduls gemäß einer ersten Ausführungsform.

Die verschiedenen Möglichkeiten des Aufbaus eines Rotors 31, 41 sind dabei in rein schematischer Weise anhand von vier Darstellungen a), b), c) und d) gezeigt.

Die Darstellungen zeigen jeweils einen geschnittenen Rotor 31, 41 in Seitenansicht, wobei der Schnitt dabei derart realisiert ist, dass in einer jeweiligen Darstellung durch einen Axial-Strömungskanal 10 und durch Magnete 13 eines jeweiligen Rotors 31, 41 geschnitten ist. Die Schnitt-Ebene entspricht somit nicht einer die Rotationsachse 3 umfassenden Ebene im Zentrum eines jeweiligen Rotors 31, 41, sondern einer Ebene, die parallel zu einer die Rotationsachse 3 umfassenden Ebene im Bereich eines radial äußeren Drittels des Rotors 31, 41 liegt.

Ein Rotor 31, 41 umfasst hier gemäß der ersten Ausführungsform eine gerade Anzahl an Rotor-Segmenten 12 und einem Fluidverteiler 15, welcher jeweils zwischen Rotor-Segmenten 12 gleicher Anzahl auf beiden seiner axialen Seiten angeordnet ist.

Ein jeweiliges Rotor-Segment 12 umfasst einen Magnet 13 sowie einen Abschnitt 14 des Axial-Strömungskanals 10.

In der Darstellung a) weist der Rotor 31, 41 lediglich zwei Rotor-Segmente 12 auf, wobei die Magnete 13 der beiden Rotor-Segmente 12 in Bezug zueinander hinsichtlich ihrer Winkelpositionen gleich ausgerichtet sind, und wobei die Abschnitte 14 des Axial-Strömungskanals 10 der beiden Rotor-Segmente 12 in Bezug zueinander ebenfalls hinsichtlich ihrer Winkelpositionen gleich ausgerichtet sind. Die Darstellung a) zeigt somit einen möglichen Aufbau eines Rotors 31, 41, dessen Magnete 13 eine Reihe bilden und dessen Abschnitte 14 des Axial-Strömungskanals 10 eine diesbezüglich parallele Reihe bilden, die auch beide parallel zur Rotationsachse 3 verlaufen.

In den Darstellungen b), c) und d) weist der Rotor 31, 41 jeweils vier Rotor-Segmente 12 auf.

Die Darstellung b) zeigt einen möglichen Aufbau eines Rotors 31, 41, dessen Magnete 13 eine Reihenanordnung bilden, die parallel zur Rotationsachse 3 verläuft, wobei die einzelnen Abschnitte 14 des Axial-Strömungskanals 10 in ihren Winkelpositionen versetzt zueinander angeordnet sind. Die Abschnitte 14 sind dabei derart versetzt zueinander positioniert, dass der Axial-Strömungskanal 10 insgesamt eine V-Form ausbildet.

Die Darstellung c) zeigt einen möglichen Aufbau eines Rotors 31, 41, bei welchem sowohl die Reihenanordnung der Magnete 13 als auch die Reihenanordnung der Abschnitte 14 des Axial-Strömungskanals 10, aufgrund einer verschränkten Anordnung der Rotor-Segmente 12, in ihren Winkelpositionen versetzt zueinander sind und jeweils eine V-Form ausbilden.

Die Darstellung d) zeigt einen möglichen Aufbau eines Rotors 31, 41, bei welchem die Reihenanordnung der Abschnitte 14 des Axial-Strömungskanals 10 eine V-Form ausbildet, wobei die Reihenanordnung der Magnete 13 eine lineare Reihe ausbildet, die im Wesentlichen geneigt zur Rotationsachse 3 verläuft.

Der Fluidfluss eines aus einem jeweiligen Fluidverteiler 15 in einen jeweiligen Axial-Strömungskanal 10 geleiteten Fluids ist hier in Form von Pfeilen dargestellt, wobei ein Pfeil neben der Darstellung d) die Drehrichtung 4 anzeigt.

Aus den Darstellungen a), b), c) und d) der Figur 2 ist somit ersichtlich, dass bei Rotation in Richtung der Drehrichtung 4 um die Rotationsachse 3 ein in den Axial-Strömungskanal 10 eingeführtes Fluid nach axial außen geführt wird. Insbesondere die V-Form des Axial-Strömungskanals 10, ausgebildet durch die zueinander versetzten Abschnitte 14 des Axial-Strömungskanals 10, begünstigen dabei einen Transport des Fluids nach axial außen.

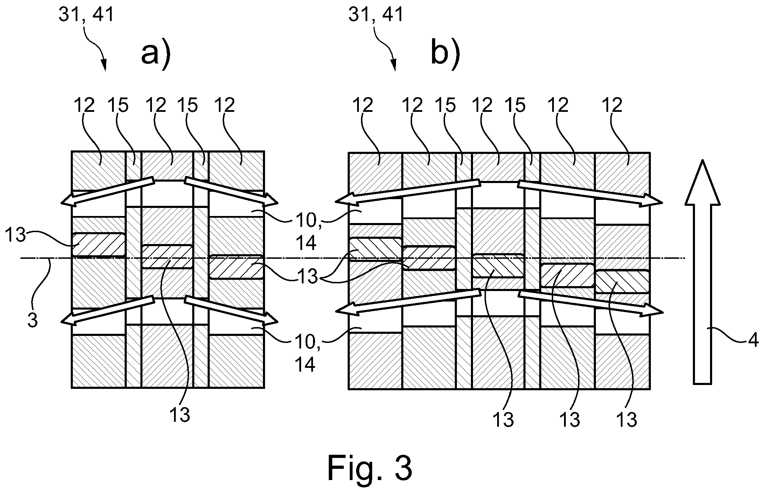

Fig. 3 zeigt verschiedene Möglichkeiten des Aufbaus eines Rotors 31, 41 einer elektrischen Rotationsmaschine eines erfindungsgemäßen Hybridmoduls gemäß einer zweiten Ausführungsform.

Wie auch in Figur 2, sind die verschiedenen Möglichkeiten des Aufbaus eines Rotors 31, 41 gemäß einer zweiten Ausführungsform in rein schematischer Weise anhand von hier zwei Darstellungen gezeigt. Die Darstellungen zeigen auch hier jeweils einen geschnittenen Rotor 31, 41 in Seitenansicht, wobei der Schnitt in einer Schnitt-Ebene äquivalent zu der Schnitt-Ebene aus Figur 2 realisiert ist.

Entgegen den Darstellungen aus Figur 2, zeigt der Schnitt hier jedoch zwei Axial-Strömungskanäle 10 und eine in Umfangsrichtung zwischen den zwei Axial-Strömungskanälen 10 positionierte Reihenanordnung der Magnete 13 eines jeweiligen Rotors 31, 41.

Weiterhin unterschiedlich zu der ersten Ausführungsform aus Figur 2 umfasst ein Rotor 31, 41 gemäß einer zweiten Ausführungsform eine ungerade Anzahl an Rotor-Segmenten 12, wobei der Rotor 31, 41 dabei mehrere Fluidverteiler 15 zwischen Rotor-Segmenten 12 in einer symmetrischen Anordnung aufweist und genau ein Rotor-Segment 12 axial zwischen den Fluidverteilern 15 positioniert ist.

Eine Darstellung a) der beiden Darstellungen a) und b) aus Figur 2 zeigt einen möglichen Aufbau eines Rotors 31, 41 mit insgesamt drei Rotor-Segmenten 12.

Die Abschnitte 14 der hier gezeigten Axial-Strömungskanäle 10 sind in ihren Winkelpositionen versetzt zueinander angeordnet, so dass beide Axial-Strömungskanäle 10 hier eine V-Form ausbilden. Die Magnete 13 bilden eine Reihe, welche geneigt zur Rotationsachse 3 verläuft.

Die Darstellung b) zeigt einen möglichen Aufbau eines Rotors 31, 41, welcher mit dem Unterschied, dass die Darstellung b) fünf Rotor-Segmente 12 umfasst, äquivalent zur Darstellung a) ausgestaltet ist.

Wie auch in Figur 2 ist der Fluidfluss eines aus einem jeweiligen Fluidverteiler 15 in einen jeweiligen Axial-Strömungskanal 10 geleiteten Fluids hier in Form von Pfeilen dargestellt, wobei ein Pfeil neben der Darstellung b) die Drehrichtung 4 anzeigt.

Aus den Darstellungen a) und b) der Figur 3 ist somit ersichtlich, dass bei Rotation in Richtung der Drehrichtung 4 um die Rotationsachse 3 ein in einen jeweiligen Axial-Strömungskanal 10 eingeführtes Fluid nach axial außen geführt wird und durch die V-Form der Axial-Strömungskanäle 10, ausgebildet durch die zueinander in ihrer Winkelposition versetzten Abschnitte 14 der Axial-Strömungskanäle 10, ein Transport des Fluids nach axial außen unterstützt wird.

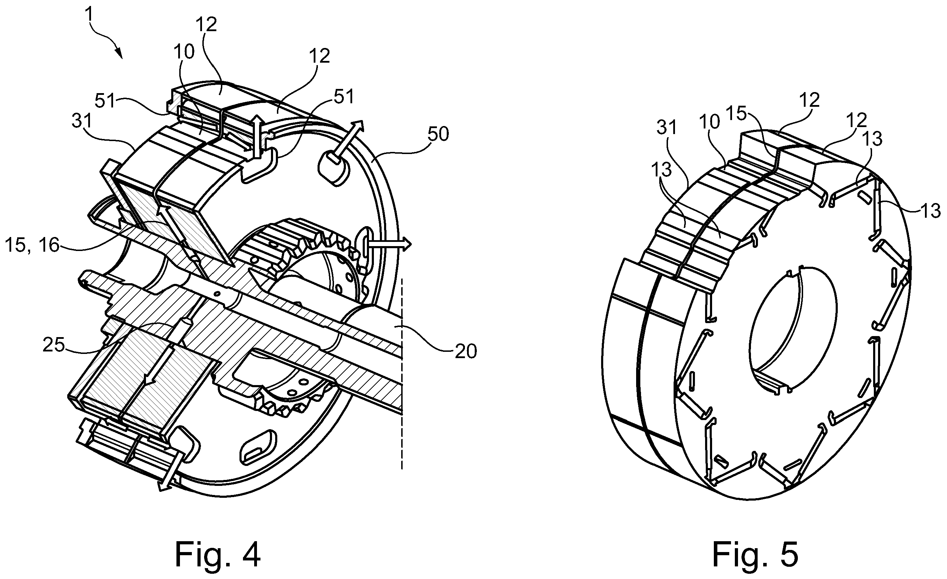

In Fig. 4 ist eine erfindungsgemäße elektrische Antriebseinheit 1 in einer geschnittenen perspektivischen Ansicht gemäß der ersten Ausführungsform dargestellt.

Die elektrische Antriebseinheit 1 entspricht dabei der in Figur 1 gezeigten elektrischen Antriebseinheit 1, wobei der Stator der ersten elektrischen Rotationsmaschine hier nicht dargestellt ist und der Rotor 31 der ersten elektrischen Rotationsmaschine einem Aufbau der Darstellung a) aus Figur 2 entspricht.

Der auf der Antriebswelle 20 angeordnete Rotor 31 der ersten elektrischen Rotationsmaschine umfasst somit zwei Rotor-Segmente 13, zwischen welchen in axialer Richtung ein Fluidverteiler 15 angeordnet ist.

Aus Figur 4 ist ersichtlich, dass die Antriebswelle 20 mehrere erste radiale Auslässe 25 umfasst, wobei ein jeweiliger dieser ersten radialen Auslässe 25 strömungstechnisch mit einem von mehreren Radial-Strömungskanälen 16 des Fluidverteilers 15 verbunden ist.

Ein in Form von Pfeilen dargestellter Fluidfluss verläuft somit am Umfang verteilt entlang mehrerer erster radialer Auslässe 25 durch mehrere Radial-Strömungskanäle 16 des Fluidverteilers 16 nach radial außen zu mehreren Axial-Strömungskanälen 10 und folglich jeweils in axialer Richtung durch Durchlässe 51 der Leitelemente 50 in Richtung des Stators der ersten elektrischen Rotationsmaschine an dessen Wickelköpfe.

Fig. 5 zeigt ergänzend zu Figur 4 einen Rotor 31 einer ersten elektrischen Rotationsmaschine der elektrischen Antriebseinheit 1 gemäß der ersten Ausführungsform.

Aus der perspektivischen Darstellung des Rotors 31 ist ersichtlich, dass die Axial-Strömungskanäle 10 des Rotors 31 in einem radial äußeren Bereich angeordnet sind, in dem auch die die Magnete 13 der Rotor-Segmente 12 angeordnet sind.

Dabei ist ein Axial-Strömungskanal 10 in radialer Richtung zwischen der radial äußersten Position eines jeweiligen Magneten 13 und der radial innersten Position eines jeweiligen Magneten 13 angeordnet.

Ein in einem derart positionierten Axial-Strömungskanal 10 geführtes Fluid kann somit an den Magneten 13 entstehende Wärme durch die räumliche Nähe optimal aufnehmen und abtransportieren.

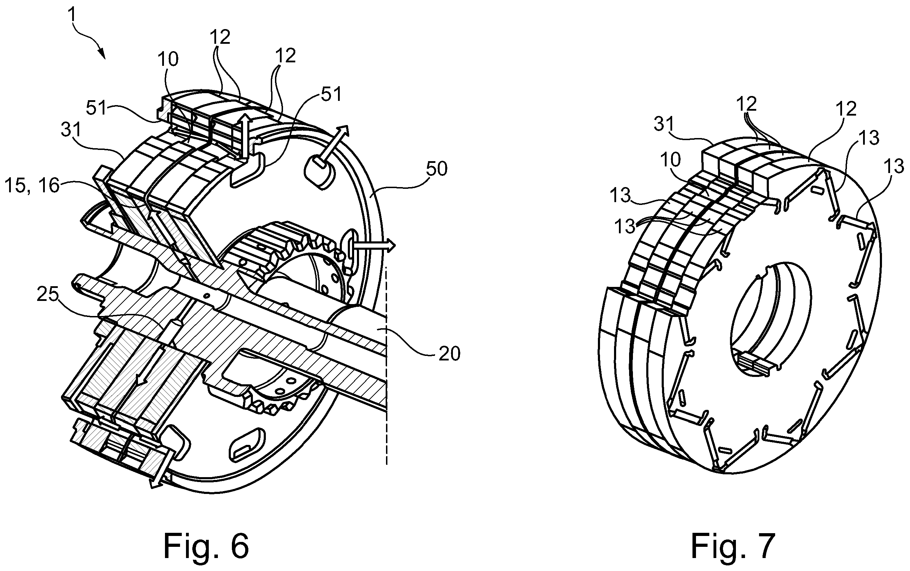

In Fig. 6 ist eine erfindungsgemäße elektrische Antriebseinheit 1 in einer geschnittenen perspektivischen Ansicht gemäß einer zweiten Ausführungsform dargestellt.

Die elektrische Antriebseinheit 1 entspricht dabei der in Figur 1 gezeigten elektrischen Antriebseinheit 1, wobei der Stator der ersten elektrischen Rotationsmaschine hier nicht dargestellt ist und der Rotor 31 der ersten elektrischen Rotationsmaschine hier einem Aufbau der Darstellung c) aus Figur 2 entspricht.

Der auf der Antriebswelle 20 angeordnete Rotor 31 der ersten elektrischen Rotationsmaschine umfasst somit vier Rotor-Segmente 13, in deren axialer Mitte ein Fluidverteiler 15 angeordnet ist.

Wie bereits in der in Figur 4 gezeigten elektrischen Antriebseinheit 1 gemäß der ersten Ausführungsform ist auch hier in Figur 6 ersichtlich, dass die Antriebswelle 20 mehrere erste radiale Auslässe 25 umfasst, wobei ein jeweiliger dieser ersten radialen Auslässe 25 strömungstechnisch mit einem von mehreren Radial-Strömungskanälen 16 des Fluidverteilers 15 verbunden ist.

Ein in Form von Pfeilen dargestellter Fluidfluss verläuft somit äquivalent zu dem in Figur 4 beschriebenem Fluidfluss.

Fig. 7 zeigt ergänzend zu Figur 6 einen Rotor 31 einer elektrischen Rotationsmaschine der elektrischen Antriebseinheit gemäß der zweiten Ausführungsform.

Identisch zu dem in Figur 5 gezeigten Rotor 31 einer elektrischen Rotationsmaschine gemäß der ersten Ausführungsform ist auch hier ersichtlich, dass die Axial-Strömungskanäle 10 des Rotors 31 in einem axial äußeren Bereich der Magnete 13 der Rotor-Segmente 12 angeordnet sind.

Die gemäß dem Aufbau der Darstellung c) aus Figur 2 zueinander verschränkten Rotor-Segmente 12 des Rotors 31 der ersten elektrischen Rotationsmaschine realisieren eine V-Form des Axial-Strömungskanals 10 sowie eine V-Form der Reihenanordnung der Magneten 13 der Rotor-Segmente 12.

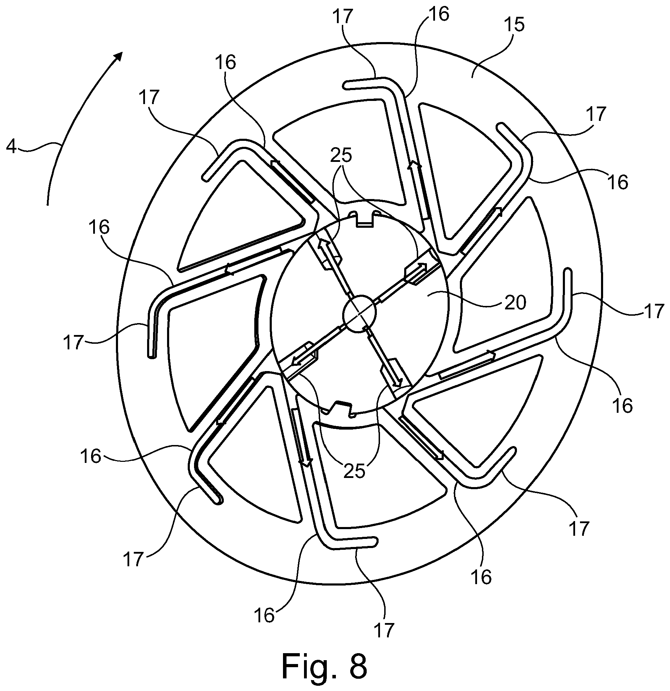

In Fig. 8 ist ein Fluidverteiler 15 eines Rotors einer elektrischen Rotationsmaschine eines erfindungsgemäßen Hybridmoduls dargestellt.

Der Fluidverteiler 15 ist dabei als eine ringförmige Scheibe ausgestaltet und weist acht Radial-Strömungskanäle 16 auf. Aus Figur 8 ist ersichtlich, dass ein jeweiliger Radial-Strömungskanal 16 in Bezug zu einer zur Rotationsachse verlaufenden radial verlaufenden Richtung eine Neigung aufweist. Die Neigung der Radial-Strömungskanäle 16 ist dabei derart in Bezug zu einer bevorzugten Drehrichtung 4 gewählt, dass eine Förderung eines in einem Radial-Strömungskanal 16 geführten Fluids nach radial außen, unter Einfluss der auf das Fluid wirkenden Zentrifugalkraft sowie der Trägheitskraft, begünstigt ist.

Zudem bildet ein jeweiliger Radial-Strömungskanal 16 an seiner radialen Außenseite einen in Umfangsrichtung verlaufenden Abschnitt 17 aus, der an seiner radialen Innenseite in den sich im Wesentlichen radial erstreckenden Abschnitt des Radial-Strömungskanals 16 übergeht.

Der in Umfangsrichtung verlaufenden Abschnitt 17 eines jeweiligen Radial-Strömungskanals 16 dient dabei der strömungstechnischen Verbindung des Radial-Strömungskanals 16 mit einem Axial-Strömungskanal eines Rotors bzw. Rotor-Segments (hier nicht dargestellt) einer elektrischen Rotationsmaschine.

Im Zentrum des Fluidverteilers 15 ist hier ein Querschnitt der Antriebswelle 20 dargestellt, auf welcher der Fluidverteiler 15 drehfest angeordnet ist. Ein jeweiliger der vier hier dargestellten ersten radialen Auslässe 25 der Antriebswelle 20 ist mit dem offenen, radial inneren Ende zweier Radial-Strömungskanäle 16 strömungstechnisch verbunden. Dabei ist der in Drehrichtung 4 erste der beiden Radial-Strömungskanäle 16 stärker geneigt zu einer zur Rotationsachse radial verlaufenden Richtung, als der in Drehrichtung 4 zweite der beiden Radial-Strömungskanäle 16. Die Neigung des in Drehrichtung 4 ersten der beiden Radial-Strömungskanäle 16 zu einer zur Rotationsachse radial verlaufenden Richtung entspricht etwa 15 Grad, wobei die Neigung des in Drehrichtung 4 zweiten der beiden Radial-Strömungskanäle 16 zu einer zur Rotationsachse radial verlaufenden Richtung etwa 65 Grad entspricht.

Ein jeweiliger Radial-Strömungskanal 16 ist axial offen ausgestaltet und eine strömungstechnische Begrenzung eines jeweiligen Radial-Strömungskanals 16 in axialer Richtung wird erst mit der Anordnung des Fluidverteilers 15 axial zwischen zwei Rotor-Segmenten realisiert, wobei die jeweiligen, dem Fluidverteiler 15 zugewandten axialen Stirnseiten dieser beiden Rotor-Segmente die axiale strömungstechnische Begrenzung aller Radial-Strömungskanäle 16 ausbilden.

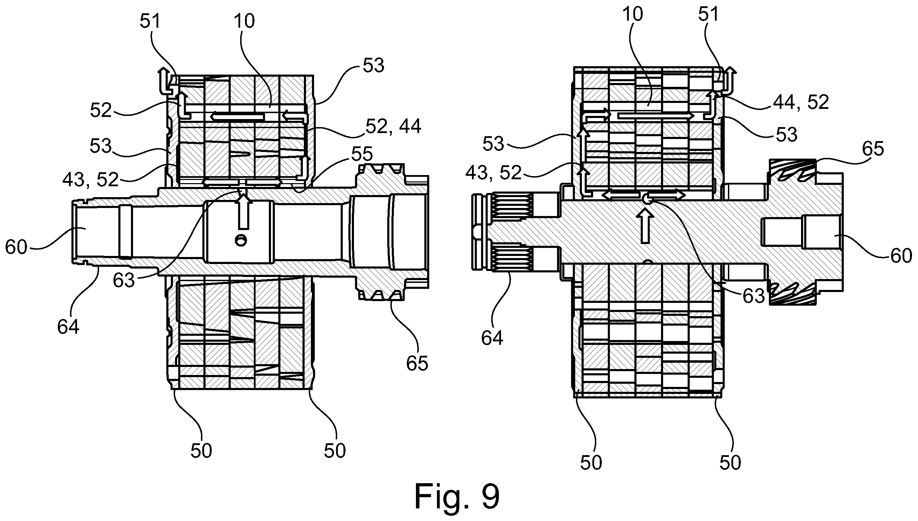

In Fig. 9 sind eine Abtriebswelle 60 und eine zweite elektrische Rotationsmaschine eines erfindungsgemäßen Hybridmoduls in geschnittener Seitenansicht gezeigt.

Die Abtriebswelle 60 und die zweite elektrische Rotationsmaschine entsprechen dabei im Wesentlichen der in Figur 1 gezeigten Abtriebswelle 60 und der zweiten elektrischen Rotationsmaschine.

Von der zweiten elektrischen Rotationsmaschine ist dabei lediglich der Rotor 41 dargestellt, welcher drehfest auf der als Hohlwelle ausgestalteten Abtriebswelle 60 angeordnet ist, und welcher sich von der Ausgestaltung des Rotors 41 aus Figur 1 unterscheidet.

Die Antriebswelle 60 weist dabei an ihrem ersten axialen Endabschnitt 61 eine Außenverzahnung 64 auf, mit welcher die Abtriebswelle 60 mit der Ausgangsseite einer Kupplungseinrichtung (hier nicht dargestellt) koppelbar ist, und an ihrem zweiten axialen Endabschnitt 62 eine Keilwellenverzahnung 65 auf, mit welcher die Abtriebswelle 60 mit einer Eingangsseite eines Getriebes (hier nicht dargestellt) koppelbar ist.

Figur 9 zeigt hier zwei Darstellungen der Abtriebswelle 60 und des Rotors 41 der zweiten elektrischen Rotationsmaschine in unterschiedlichen Schnitt-Ebenen, wobei in einer Darstellung dadurch jeweils einer von zwei möglichen Fluidflüssen im hier dargestellten Rotor 41 der zweiten elektrischen Rotationsmaschine erkennbar ist.

Auf der ersten axialen Stirnseite 43 sowie auf der zweiten axialen Stirnseite 44 des Rotors 41 ist jeweils ein Leitelement 50 angeordnet. Ein jeweiliges Leitelement 50 weist dabei mehrere Vertiefungen als Strömungsleitelemente 53 in der dem Rotor 41 zugewandten axialen Seite auf, so dass sich zwischen einer Stirnseite 43, 44 des Rotors 41 und einem Strömungsleitelement 53 des Leitelements 50 jeweils ein Zwischenraum 52 ausbildet.

Zudem ist in radialer Richtung zwischen dem Rotor 41 und der Abtriebswelle 60 ein axialer Verteilungskanal 55 ausgebildet, welcher axial durch die Leitelemente 50 auf beiden axialen Seiten begrenzt ist und strömungstechnisch mit Zwischenräumen 52 auf beiden axialen Seiten des Rotors 41 verbunden ist. Weiterhin ist der axiale Verteilungskanal 55 mit einer radialen Öffnung 63 in der Abtriebswelle 60 strömungstechnisch verbunden.

Radial weiter außen angeordnete Strömungsleitelemente 53 realisieren einen Zwischenraum 52, welcher einen Axial-Strömungskanal 10 und einen Durchlass 51 in axialer Richtung in einem Leitelement 50 strömungstechnisch miteinander verbindet, wobei radial weiter innen angeordnete Strömungsleitelemente 53 einen Zwischenraum 52 realisieren, welcher den axialen Verteilungskanal 55 strömungstechnisch mit dem Axial-Strömungskanal 10 verbindet.

Ein Fluidfluss ist hier wie auch schon in anderen Figuren in Form von Pfeilen dargestellt.

Bei Rotation der Abtriebswelle 60 und damit auch Rotation des Rotors 41 und bei Zufuhr eines Fluids durch die radiale Öffnung 63 in den axialen Verteilungskanal 55 zwecks Kühlung der zweiten elektrischen Rotationsmaschine wird das Fluid zunächst axial beidseitig an ein Leitelement 50 herangeführt. Ein nachfolgender Transport des Fluids nach radial außen wird durch die auf das Fluid wirkenden Zentrifugalkräfte und Trägheitskräfte unterstützt.

Die linke der beiden Darstellungen in Figur 9 zeigt einen ersten möglichen Fluidfluss, bei dem das Fluid aus dem axialen Verteilungskanal 55 in einen Zwischenraum 52 an der zweiten axialen Stirnseite 44 zwischen Rotor 41 und Strömungsleitelement 53 des dort angeordneten Leitelements 50 fließt. Dieser Zwischenraum 52 verbindet strömungstechnisch den axialen Spalt 52 und den Axial-Strömungskanal 10 und leitet das Fluid damit an der zweiten axialen Stirnseite 44 in den Axial-Strömungskanal 10 ein und durch den Axial-Strömungskanal 10 axial durch den Rotor 41 hindurch zur ersten axialen Stirnseite 43 des Rotors 41. Das dort aus dem Axial-Strömungskanal 10 austretende Fluid wird durch einen zwischen Rotor 41 und Strömungsleitelement 53 des wiederum dort angeordneten Leitelements 50 ausgebildeten Zwischenraum 52 an einen Durchlass 51 dieses Leitelements 50 geführt und tritt dort aus dem Rotor 41 aus. Der Fluidfluss entspricht hier somit im Wesentlichen einem mäanderförmigen Verlauf.

Die rechte der beiden Darstellungen in Figur 9 zeigt nun einen zweiten möglichen Fluidfluss, wobei dieser zweite mögliche Fluidfluss einer gespiegelten Ausführung des ersten mäanderförmigen Fluidflusses entspricht.

Ein durch die radiale Öffnung 63 in den axialen Verteilungskanal 55 geführtes Fluid wird somit in dem hier dargestellten Rotor 41 an beiden axialen Seiten durch Zwischenräume 52 zum Axial-Strömungskanal 10 und dann durch diesen an einen Durchlass 51 und somit aus dem Rotor 41 herausgeführt. Damit ist sichergestellt, dass sowohl eine Kühlung der Stirnseiten 43, 44 des Rotors 41, als auch eine Kühlung des axial mittigen Bereichs des Rotors 41 gewährleistet ist und gleichzeitig an beiden axialen Seiten des Rotors 41 Fluid aus dem Rotor 41 austreten kann zwecks Weiterleitung des Fluids an Wickelköpfe des Stators der elektrischen Rotationsmaschine zwecks deren Kühlung.

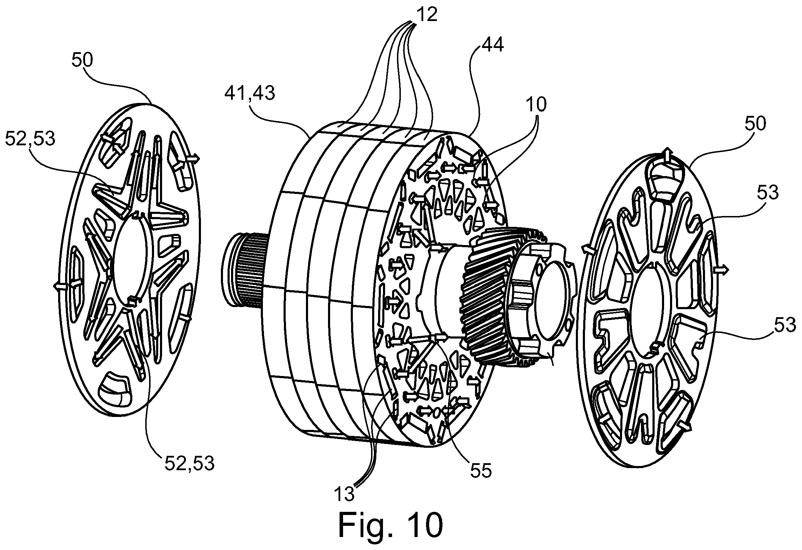

Fig.10 zeigt die Abtriebswelle 60 und die zweite elektrische Rotationsmaschine des erfindungsgemäßen Hybridmoduls in perspektivischer Ansicht.

Die Abtriebswelle 60 und die zweite elektrische Rotationsmaschine entsprechen dabei der bereits in Figur 9 dargestellten Abtriebswelle 60 und zweiten elektrischen Rotationsmaschine.

Die Leitelemente 50 sind dabei wie in einer Explosionsdarstellung von ihrer Position an den axialen Stirnseiten 43, 44 des Rotors 41 beabstandet dargestellt, wodurch die durch die Strömungsleitelemente 53 ausgebildeten Zwischenräume 52 deutlich ersichtlich sind.

Zudem ist erkennbar, dass der Rotor 41 fünf zueinander verschränkte Rotor-Segmenten 12 umfasst. Ein jeweiliger Axial-Strömungskanal 10 weist somit zusätzlich zu seiner Erstreckungskomponente in axialer Richtung eine durch die Verschränkung definierte Steigung entlang der Umfangsrichtung auf.

Weiterhin ist in Figur 10 ersichtlich, dass in den Rotor-Segmenten 12 angeordnete Magnete 13 radial weiter außen angeordnet sind als ein jeweiliger Axial-Strömungskanal 10.

Mit der erfindungsgemäßen elektrischen Antriebseinheit sowie dem damit ausgestatteten Hybridmodul und einer das Hybridmodul umfassenden Antriebsanordnung lässt sich eine optimale Kühlung bei geringen Bauraumanforderungen mit einer kostengünstigen Ausgestaltung kombinieren.

### Bezugszeichenliste

- 1: elektrische Antriebseinheit
- 2: Hybridmoduls
- 3: Rotationsachse
- 4: Drehrichtung

- 10: Axial-Strömungskanal
- 11: axial seitlicher Auslass
- 12: Rotor-Segment
- 13: Magnet des Rotor-Segments
- 14: Abschnitt des Axial-Strömungskanals
- 15: Fluidverteiler
- 16: Radial-Strömungskanal des Fluidverteilers
- 17: in Umfangsrichtung verlaufender Abschnitt des Radial-Strömungskanals

- 20: Antriebswelle
- 21: erster stirnseitiger Endbereich
- 22: zweiter stirnseitiger Endbereich
- 23: zentraler Strömungskanal
- 24: Fluid-Einlass
- 25: erster radialer Auslass
- 26: zweiter radialer Auslass
- 27: dritter radialer Auslass
- 28: endseitiger Auslass

- 30: erste elektrische Rotationsmaschine
- 31: Rotor der ersten elektrischen Rotationsmaschine
- 32: Stator der ersten elektrischen Rotationsmaschine
- 33: erste axiale Stirnseite des Rotors der ersten elektrischen Rotationsmaschine
- 34: zweite axiale Stirnseite des Rotors der ersten elektrischen Rotationsmaschine
- 35: Wickelkopf des Stators der ersten elektrischen Rotationsmaschine
- 40: zweite elektrische Rotationsmaschine
- 41: Rotor der zweiten elektrischen Rotationsmaschine
- 42: Stator der zweiten elektrischen Rotationsmaschine
- 43: erste axiale Stirnseite des Rotors der zweiten elektrischen Rotationsmaschine
- 44: zweite axiale Stirnseite des Rotors der zweiten elektrischen Rotationsmaschine
- 45: Wickelkopf des Stators der zweiten elektrischen Rotationsmaschine

- 50: Leitelement
- 51: Durchlass
- 52: Zwischenraums
- 53: Strömungsleitelement
- 54: Fluidführungselement
- 55: axialer Verteilungskanal

- 60: Abtriebswelle
- 61: erster axialer Endabschnitt der Abtriebswelle
- 62: zweiter axialer Endabschnitt der Abtriebswelle
- 63: radiale Öffnung der Abtriebswelle
- 64: Außenverzahnung
- 65: Keilwellenverzahnung

- 70: Kupplungseinrichtung
- 71: Eingangsseite der Kupplungseinrichtung
- 72: Ausgangsseite der Kupplungseinrichtung

- 80: Hybridgehäuse
- 81: Fluidzufuhrleitung

## Patentansprüche

1. Elektrische Antriebseinheit (1), insbesondere als Bestandteil eines Hybridmoduls (2) oder eines Hybridgetriebes, umfassend eine Antriebswelle (20) sowie eine erste elektrische Rotationsmaschine (30), deren Rotor (31) drehfest mit der Antriebswelle (20) gekoppelt ist, eine als Hohlwelle ausgestaltete Abtriebswelle (60), welche die Antriebswelle (20) bereichsweise radial umgibt, sowie eine zweite elektrische Rotationsmaschine (40), deren Rotor (41) drehfest auf der Abtriebswelle (60) angeordnet ist, wobei im Rotor (31) der ersten elektrischen Rotationsmachine (30) beabstandet zur Antriebswelle (20) und im Rotor (41) der zweiten elektrischen Rotationsmaschine (40) jeweils ein Axial-Strömungskanal (10) ausgebildet ist, der mit zumindest einer Komponente seiner Längserstreckungsrichtung parallel zur Rotationsachse (3) des jeweiligen Rotors (31, 41) verläuft, sodass beim Betrieb der ersten oder zweiten elektrischen Rotationsmaschine (30, 40) Wärme auf ein Fluid im Axial-Strömungskanal (10) übertragbar ist, wobei die Antriebswelle (20) eine Hohlwelle ist, deren Hohlraum ein zentraler Strömungskanal (23) ist, und die Antriebswelle (20) einen ersten radialen Auslass (25) und einen dritten radialen Auslass (27) zum Transport eines sich in dem zentralen Strömungskanal (23) befindlichen Fluids zur ersten und über eine radiale Öffnung (63) in der Abtriebswelle (60) zur zweiten elektrischen Rotationsmaschine (30,40) aufweist.

2. Elektrische Antriebseinheit (1) nach Anspruch 1,
**dadurch gekennzeichnet, dass** an der radialen Außenseite des Rotors (31) Magneten (13) angeordnet sind, wobei der Axial-Strömungskanal (10) eine radiale Position im Rotor (31) aufweist, die mindestens 8/10 des Radius der minimalen radialen Position der Magneten (13) entspricht.

3. Elektrische Antriebseinheit (1) nach einem der vorhergehenden Ansprüche,
**dadurch gekennzeichnet, dass** der Axial-Strömungskanal (10) derart ausgebildet ist, dass wenigstens ein axial seitlicher Auslass (11) des Axial-Strömungskanals (10) derart angeordnet ist, dass daraus austretendes Fluid an einen Stator (32) der ersten elektrische Rotationsmaschine (30), insbesondere an einen vom oder am Stator (32) ausgebildeten Wickelkopf (35) zwecks dortiger Kühlungswirkung gelangt.

4. Elektrische Antriebseinheit (1) nach einem der vorhergehenden Ansprüche, **dadurch gekennzeichnet, dass** im Rotor (31) ein im Wesentlichen radial verlaufender Radial-Strömungskanal (16) ausgebildet ist, der strömungstechnisch mit dem Axial-Strömungskanal (10) gekoppelt ist.

5. Elektrische Antriebseinheit (1) nach einem der vorhergehenden Ansprüche, **dadurch gekennzeichnet, dass** der Rotor (31) mehrere den Rotor (31) axial unterteilende Rotor-Segmente (12) aufweist, wobei mindestens ein Fluidverteiler (15) zwischen Rotor-Segmenten (12) angeordnet ist, der mehrere Radial-Strömungskanäle (16) ausbildet.

6. Elektrische Antriebseinheit (1) nach Anspruch 5,
**dadurch gekennzeichnet, dass** mehrere Rotor-Segmente (12) einen Abschnitt (14) des Axial-Strömungskanals (10) ausbilden, wobei die Rotor-Segmente (12) in Bezug zueinander hinsichtlich der Ausrichtung der Abschnitte (14) des Axial-Strömungskanals (10) in ihren Winkelpositionen versetzt angeordnet sind, sodass der durch die Abschnitte (14) ausgebildete Axial-Strömungskanal (10) an dem Umfang der radialen Position des Axial-Strömungskanals (10) zumindest streckenweise eine Steigung aufweist.

7. Elektrische Antriebseinheit (1) nach einem der Ansprüche 1 bis 3,
**dadurch gekennzeichnet, dass** der Rotor (31) wenigstens ein an einer axialen Stirnseite (43, 44) angeordnetes Leitelement (50) aufweist zur Ausbildung wenigstens eines Zwischenraums (52) zwischen einem Rotor-Segment (12) sowie dem Leitelement (50) zur Ermöglichung einer Fluidströmung mit radialer Komponente zwecks Fluidzufuhr an der Stirnseite (43, 44) in den Axial-Strömungskanal (10).

8. Elektrische Antriebseinheit (1) nach Anspruch 7,
**dadurch gekennzeichnet, dass** das Leitelement (50) mehrere Strömungsleitelemente (53) umfasst, die unter Verzweigung Fluid nach radial außen transportieren können.

9. Hybridmodul (2) für ein Kraftfahrzeug, insbesondere für ein Hybridkraftfahrzeug, zum Ankoppeln einer Verbrennungskraftmaschine, umfassend eine elektrische Antriebseinheit (1) gemäß einem der Ansprüche 1 bis 8 sowie eine Anschlusseinrichtung zum Anschluss einer Verbrennungskraftmaschine.

10. Antriebsanordnung für ein Kraftfahrzeug, umfassend ein Hybridmodul (2) gemäß Anspruch 9 sowie ein Antriebsaggregat, insbesondere eine Verbrennungskraftmaschine, sowie ein Getriebe, wobei das Hybridmodul (2) mit einer Eingangsseite mit dem Antriebsaggregat und mit einer Ausgangsseite mit dem Getriebe mechanisch gekoppelt ist.

## Claims

1. An electric drive unit (1), in particular as part of a hybrid module (2) or a hybrid transmission, comprising a drive shaft (20) and a first electric rotary machine (30), the rotor (31) of which is coupled in a rotationally fixed manner to the drive shaft (20), and an output shaft (60) designed as a hollow shaft which radially surrounds the drive shaft (20) in regions, and a second electric rotary machine (40), the rotor (41) of which is arranged in a rotationally fixed manner on the output shaft (60), wherein an axial flow channel (10) is formed in each case in the rotor (31) of the first electric rotary machine (30) at a distance from the drive shaft (20) and in the rotor (41) of the second electric rotary machine (40), which axial flow channel extends with at least one component of its longitudinal extension direction parallel to the axis of rotation (3) of the rotor (31, 41), so that, during operation of the first or second electric rotary machine (30, 40), heat can be transferred to a fluid in the axial flow channel (10), the drive shaft (20) being a hollow shaft, the cavity of which is a central flow channel (23), and the drive shaft (20) having a first radial outlet (25) and a third radial outlet (27) for transporting a fluid located in the central flow channel (23) to the first electric rotary machine (30) and via a radial opening (63) in the output shaft (60) to the second electric rotary machine (40).

2. The electric drive unit (1) according to claim 1,
**characterised in that** magnets (13) are arranged on the radial outer side of the rotor (31), wherein the axial flow channel (10) has a radial position in the rotor (31) which corresponds to at least 8/10 of the radius of the minimum radial position of the magnets (13).

3. The electric drive unit (1) according to any one of the preceding claims,
**characterised in that** the axial flow channel (10) is formed such that at least one axially lateral outlet (11) of the axial flow channel (10) is arranged such that fluid exiting from it reaches a stator (32) of the first electric rotary machine (30), in particular an end winding (35) formed by or on the stator (32) for the purpose of a cooling effect there.

4. The electric drive unit (1) according to any one of the preceding claims,
**characterised in that** a substantially radially extending radial flow channel (16) is formed in the rotor (31), which is fluidically coupled to the axial flow channel (10).

5. The electric drive unit (1) according to any one of the preceding claims,
**characterised in that** the rotor (31) has a plurality of rotor segments (12) axially dividing the rotor (31), wherein at least one fluid distributor (15) is arranged between rotor segments (12) and forms a plurality of radial flow channels (16).

6. The electric drive unit (1) according to claim 5,
**characterised in that** a plurality of rotor segments (12) form a portion (14) of the axial flow channel (10), wherein the rotor segments (12) are arranged offset relative to one another in their angular positions with respect to the orientation of the portions (14) of the axial flow channel (10), such that the axial flow channel (10) formed by the portions (14) has a gradient at least in part at the circumference of the radial position of the axial flow channel (10).

7. The electric drive unit (1) according to any one of claims 1 to 3,
**characterised in that** the rotor (31) has at least one guide element (50) arranged on an axial end face (43, 44) to form at least one space (52) between a rotor segment (12) and the guide element (50) so as to enable a fluid flow with a radial component for the purpose of supplying fluid at the end face (43, 44) into the axial flow channel (10).

8. The electric drive unit (1) according to claim 7,
**characterised in that** the guide element (50) comprises a plurality of flow guide elements (53) which can transport fluid radially outwards by branching.

9. A hybrid module (2) for a motor vehicle, in particular for a hybrid motor vehicle, for coupling an internal combustion engine, comprising an electric drive unit (1) according to any one of claims 1 to 8 and a connection device for connecting an internal combustion engine.

10. A drive assembly for a motor vehicle, comprising a hybrid module (2) according to claim 9 and a power unit, in particular an internal combustion engine, and a transmission, wherein the hybrid module (2) is mechanically coupled to the power unit at an input side and to the transmission at an output side.

## Revendications

1. Unité d'entraînement électrique (1), en particulier comme partie constitutive d'un module hybride (2) ou d'une transmission hybride, comprenant un arbre d'entraînement (20) et une première machine rotative électrique (30) dont le rotor (31) est couplé de manière solidaire en rotation à l'arbre d'entraînement (20), et un arbre de sortie (60) conçu comme un arbre creux. qui entoure radialement l'arbre d'entraînement (20) à certains endroits, et une seconde machine rotative électrique (40) dont le rotor (41) est agencé de manière solidaire en rotation sur l'arbre de sortie (60), dans laquelle un canal d'écoulement axial (10) est respectivement réalisé dans le rotor (31) de la première machine rotative électrique (30) à une certaine distance de l'arbre d'entraînement (20) et dans le rotor (41) de la seconde machine rotative électrique (40), qui se prolonge avec au moins une composante de son extension longitudinale parallèlement à l'axe de rotation (3) du rotor (31, 41) respectif, de sorte que, pendant le fonctionnement de la première ou de la seconde machine rotative électrique (30, 40), de la chaleur peut être transférée à un fluide dans le canal d'écoulement axial (10), dans laquelle l'arbre d'entraînement (20) est un arbre creux dont la cavité est un canal d'écoulement central (23), et l'arbre d'entraînement (20) présente une première sortie radiale (25) et une troisième sortie radiale (27) pour transporter un fluide se trouvant dans le canal d'écoulement central (23) vers la première et, par l'intermédiaire d'une ouverture radiale (63) dans l'arbre de sortie (60), vers la seconde machine rotative électrique (30,40).

2. Unité d'entraînement électrique (1) selon la revendication 1,
**caractérisée en ce que** des aimants (13) sont agencés sur le côté extérieur radial du rotor (31), dans laquelle le canal d'écoulement axial (10) présente une position radiale dans le rotor (31) qui correspond à au moins 8/10 du rayon de la position radiale minimale des aimants (13).

3. Unité d'entraînement électrique (1) selon l'une des revendications précédentes,
**caractérisée en ce que** le canal d'écoulement axial (10) est réalisé de telle sorte qu'au moins une sortie latérale axiale (11) du canal d'écoulement axial (10) est agencée de telle sorte que le fluide qui en sort atteint un stator (32) de la première machine rotative électrique (30), en particulier une tête d'enroulement (35) réalisée par ou sur le stator (32) dans le but de la refroidir.

4. Unité d'entraînement électrique (1) selon l'une des revendications précédentes,
**caractérisée en ce qu'**un canal d'écoulement radial (16) se prolongeant sensiblement radialement est réalisé dans le rotor (31), qui est couplé du point de vue de la technique des fluides au canal d'écoulement axial (10).

5. Unité d'entraînement électrique (1) selon l'une des revendications précédentes,
**caractérisée en ce que** le rotor (31) présente plusieurs segments de rotor (12) divisant axialement le rotor (31), dans laquelle au moins un distributeur de fluide (15) est agencé entre les segments de rotor (12) qui forment plusieurs canaux d'écoulement radiaux (16).

6. Unité d'entraînement électrique (1) selon la revendication 5,
**caractérisée en ce que** plusieurs segments de rotor (12) forment une section (14) du canal d'écoulement axial (10), dans laquelle les segments de rotor (12) sont décalés dans leurs positions angulaires les uns par rapport aux autres en ce qui concerne l'orientation des sections (14) du canal d'écoulement axial (10), de sorte que le canal d'écoulement axial (10) formé par les sections (14) présente une pente au moins par tronçons sur la circonférence de la position radiale du canal d'écoulement axial (10).

7. Unité d'entraînement électrique (1) selon l'une des revendications 1 à 3,
**caractérisée en ce que** le rotor (31) présente au moins un élément de guidage (50) agencé sur un côté frontal (43, 44) axial pour réaliser au moins un espace intermédiaire (52) entre un segment de rotor (12) et l'élément de guidage (50) afin de permettre un écoulement de fluide avec une composante radiale dans le but d'alimenter en fluide le côté frontal (43, 44) dans le canal d'écoulement axial (10).

8. Unité d'entraînement électrique (1) selon la revendication 7,
**caractérisée en ce que** l'élément de guidage (50) comprend plusieurs éléments de guidage d'écoulement (53) qui peuvent transporter le fluide radialement vers l'extérieur par ramification.

9. Module hybride (2) pour un véhicule automobile, en particulier pour un véhicule automobile hybride, pour accoupler un moteur à combustion interne, comprenant une unité d'entraînement électrique (1) selon l'une des revendications 1 à 8 et un équipement de raccordement pour raccorder un moteur à combustion interne.

10. Ensemble d'entraînement pour un véhicule automobile, comprenant un module hybride (2) selon la revendication 9 et un groupe d'entraînement, en particulier un moteur à combustion interne, et une transmission, dans lequel le module hybride (2) est accouplé mécaniquement au groupe d'entraînement du côté entrée et à la transmission du côté sortie.
